# EUROPÄISCHE PATENTSCHRIFT

(11) **EP 2 628 376 B1**
(45) Veröffentlichungstag und Bekanntmachung des Hinweises auf die Patenterteilung: **10.01.2018**
(21) Anmeldenummer: 12194788.1
(22) Anmeldetag: 29.11.2012
(51) Int. Cl.: G05G 9/047, A01D 43/08, E02F 9/20

(54) **Landwirtschaftliches Arbeitsfahrzeug**
Agricultural work vehicle
Véhicule de travail agricole

(30) Priorität: 15.02.2012 DE 102012002992
(43) Veröffentlichungstag der Anmeldung: 21.08.2013
(73) Patentinhaber: CLAAS Selbstfahrende Erntemaschinen GmbH, 33428 Harsewinkel (DE)
(72) Erfinder: Schwenk, Ingo, 33330 Gütersloh (DE); Harenkamp, Henning, 48336 Sassenberg (DE)

(56) Entgegenhaltungen:
- EP-A1- 0 361 666
- WO-A1-2009/048364
- DE-A1-102007 018 405
- DE-A1-102009 034 154
- US-A1- 2007 199 439
- US-A1- 2009 118 911

## Beschreibung

Die vorliegende Erfindung betrifft ein landwirtschaftliches Arbeitsfahrzeug wie etwa einen Feldhäcksler oder einen Mähdrescher. Die Arbeitswerkzeuge derartiger Fahrzeuge sind im Allgemeinen abnehmbar, sei es, um jeweils zur Anpassung an eine auszuführende Arbeit das Arbeitswerkzeug austauschen zu können, oder weil die Abmessungen des Arbeitswerkzeugs so groß sind, dass das Arbeitsfahrzeug mit montiertem Arbeitswerkzeug keine öffentlichen Straßen befahren dürfte und das Arbeitswerkzeug deshalb vom Arbeitsfahrzeug getrennt, z.B. auf einem von dem Arbeitsfahrzeug gezogenen Anhänger, zum Einsatzort gefahren und dort aufgenommen werden muss.

Das Aufnehmen und Absetzen eines Arbeitswerkzeugs erfordert von einem Benutzer viel Vorsicht und Übung, denn Fehler können zu Schäden am Arbeitswerkzeug führen, die nur mit hohem Aufwand wieder zu beseitigen sind. Um ein Antriebsaggregat zum Heben oder Senken des Arbeitswerkzeugs zu steuern, verfügt ein herkömmliches Arbeitsfahrzeug über einen in zwei Freiheitsgraden beweglichen Kippschalter. Durch Schwenken des Kippschalters in einem ersten Freiheitsgrad kann der Fahrer wählen, ob das Arbeitswerkzeug angehoben oder angesenkt werden soll, und durch Schwenken im zweiten Freiheitsgrad legt er die Geschwindigkeit der Bewegung fest. Um ein Arbeitswerkzeug aufzunehmen, wird ein Fahrer im Allgemeinen das Arbeitsfahrzeug mit einer weit abgesenkten fahrzeugseitigen Kupplung an das Arbeitswerkzeug heranfahren und die Kupplung mit der niedrigen Geschwindigkeit anheben, um sie mit einer werkzeugseitigen Kupplung in Eingriff zu bringen. Je weiter die fahrzeugseitige Kupplung abgesenkt ist und je langsamer sie angehoben wird, umso sicherer kann zwar eine Beschädigung des Arbeitswerkzeugs vermieden werden, umso länger dauert aber auch das Aufnehmen des Werkzeugs.

Ein landwirtschaftliches Arbeitsfahrzeug mit einem Multifunktionsgriff, dessen diverse Bedienelemente eine solche Steuerung eines Arbeitswerkzeugs ermöglichen, ist aus DE 10 2009 034 154 A1 bekannt.

Aus der EP 0 361 666 A1 ist zur Steuerung eines Arbeitswerkzeuges einer Arbeitsmaschine es bekannt, zwei Joysticks zu verwenden. Die Joysticks nehmen in ihrer Neutralstellung eine vertikal stehende beziehungsweise horizontal liegende Position ein. Zur Ansteuerung des Arbeitswerkzeuges wird der jeweilige Joystick gegenüber seiner Neutralstellung geneigt.

Die DE 10 2007 018 405 A1 beschreibt einen Traktor mit daran angeordnetem Frontlader. Die Steuerung der Arbeitshydraulik zur Betätigung des Frontladers erfolgt durch einen Joystick, der aus einer federzentrierten Mittelstellung um einen definierten Winkel schwenkbar ist.

Die US 2007/0199439 A1 beschreibt einen Joystick, der eine Steuerung eines Arbeitswerkzeugs an einer landwirtschaftlichen Arbeitsmaschine ermöglicht. Die Steuerung des Arbeitswerkzeuges erfolgt durch das Schwenken des Joysticks um seine Neutralstellung, in der dieser im Wesentlichen aufrecht steht.

Aufgabe der Erfindung ist, ein landwirtschaftliches Arbeitsfahrzeug bereitzustellen, das eine gleichzeitig schnelle und sichere Handhabung von Arbeitswerkzeugen ermöglicht.

Die Aufgabe wird durch die Merkmale des Anspruchs 1 gelost. Dies ermöglicht es dem Benutzer, die Geschwindigkeit des Antriebsaggregats flexibel an den Grad der Gefährdung anzupassen und so etwa beim Absetzen das Arbeitswerkzeug zunächst schnell abzusenken, solange es von einer Unterlage weit entfernt ist, und mit zunehmender Annäherung an die Unterlage die Geschwindigkeit zu reduzieren, um so das Werkzeug schließlich sanft und sicher auf der Unterlage zu platzieren.

Das ist Bedienelement ist zum Regeln der Geschwindigkeit durch Drehen an einer Achse auslenkbar. Für eine sichere Handhabung ist es zweckmäßig, dass das Bedienelement eine geriffelte Umfangsfläche aufweist.

Die Achse, um die das Bedienelement drehbar ist, ist quer zur Fahrtrichtung des Arbeitsfahrzeugs orientiert, so dass beim Auslenken die Umfangsfläche des Bedienelements vertikal oder in Fahrtrichtung, nicht aber in Fahrzeugquerrichtung bewegt wird. Dies ermöglicht es auch einem ungeübten Benutzer, den gedanklichen Zusammenhang zwischen Richtung der Auslenkung und Richtung der Werkzeugsbewegung herzustellen und ein versehentliches Bewegen des Werkzeugs in die falsche, nicht gewollte Richtung zu vermeiden.

Wenn nur ein Teil der Oberfläche des Bedienelements freiliegt und der Rest z.B. in einem Gehäuse unzulänglich ist, dann ist diese freiliegende Oberfläche vorzugsweise so orientiert, dass durch Auslenken dieser Oberfläche nach oben und/oder in Fahrtrichtung das Arbeitswerkzeug anhebbar und durch Auslenken entgegen der Fahrtrichtung und/oder nach unten absenkbar ist. So kann eine gute Zugänglichkeit und bequeme Bedienbarkeit der Oberfläche kombiniert werden mit einem für den Benutzer unmittelbar intuitiv einleuchtenden Zusammenhang zwischen Richtung der Auslenkung und Richtung der daraus resultierenden Werkzeugbewegung.

Vorzugsweise ist das Bedienelement zusammen mit Bedienelementen für andere Funktionen des Arbeitsfahrzeugs an einem Multifunktionsgriff angeordnet.

Ein solcher Multifunktionsgriff kann eine Auflagefläche aufweisen, die orientiert ist, wenigstens einen Teil des Handtellers einer in einer Betriebshaltung aufliegenden Hand eines Benutzers zu unterstützen und so eine über lange Zeit ermüdungsfreie Bedienung zu ermöglichen. Das Bedienelement sollte dann am Multifunktionsgriff so platziert sein, dass es für einen Finger der in der Betriebshaltung aufliegenden Hand erreichbar ist.

Eine Oberfläche des Multifunktionsgriffs kann, vorzugsweise quer zur Auslenkrichtung, bündig an die freiliegende Oberfläche des Bedienelements anschließen. Eine solche Oberflächenform kann helfen, eine versehentliche Auslenkung des Bedienelements zu verhindern.

Damit nicht ein versehentliches leichtes Berühren des Bedienelements zu einer ungewollten Bewegung des Werkzeugs führt, kann das Bedienelement in der Neutralstellung durch ein Rastmittel fixiert sein.

Eine Beeinflussung der Position des Arbeitswerkzeugs durch zufällige, kleine Auslenkungen des Bedienelements kann auch dadurch verhindert werden, dass ein Intervall der Auslenkung, in dem die Geschwindigkeit des Arbeitswerkzeugs null ist, sich beiderseits der Neutralstellung erstreckt, so dass eine Bewegung des Werkzugs erst einsetzt, wenn das Bedienelement aus diesem Intervall heraus ausgelenkt wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Ansicht eines Feldhäckslers als Beispiel eines erfindungsgemäßen landwirtschaftlichen Fahrzeugs;
- Fig. 2: eine Ansicht des Kopfs eines in dem Feldhäcksler der Fig. 1 verwendeten Multifunktionsgriffs;
- Fig. 3: den Kopf mit darauf aufliegender Hand eines Fahrers;
- Fig. 4: ein Bedienelement des Multifunktionsgriffs;
- Fig. 5: einen Graphen, der den Zusammenhang zwischen der Auslenkung des Bedienelements und der Hebe- bzw. Senkgeschwindigkeit des Werkzeugs des Feldhäckserls zeigt;

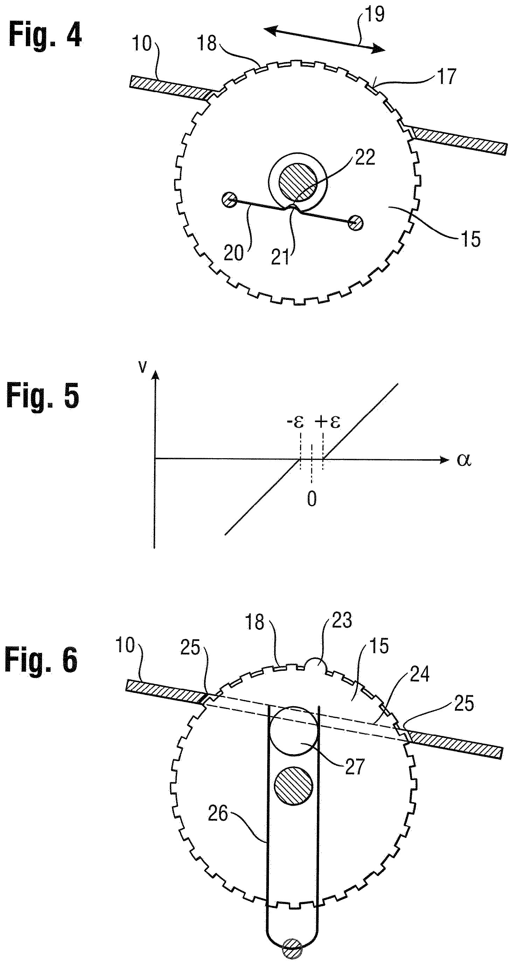

- Fig. 5: eine Variante des Bedienelements; und

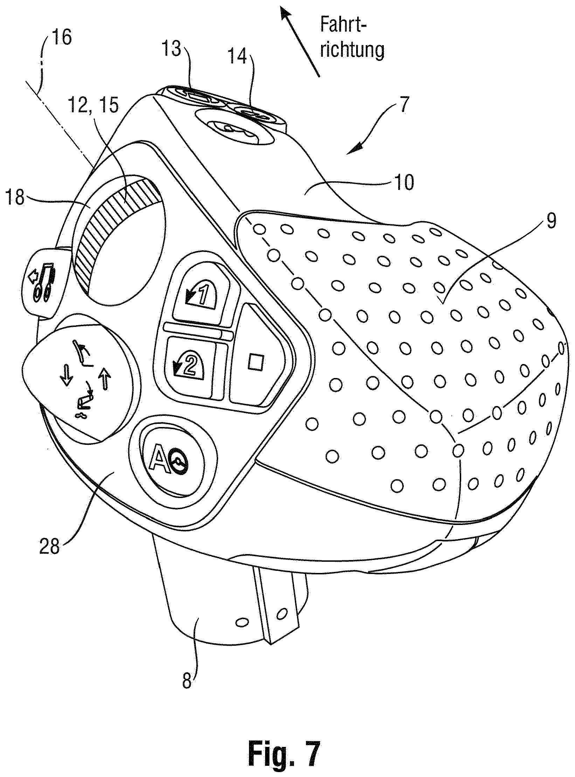

- Fig. 7: eine perspektivische Ansicht des Kopfs eines Multifunktionsgriffs gemäß einer zweiten Ausgestaltung;

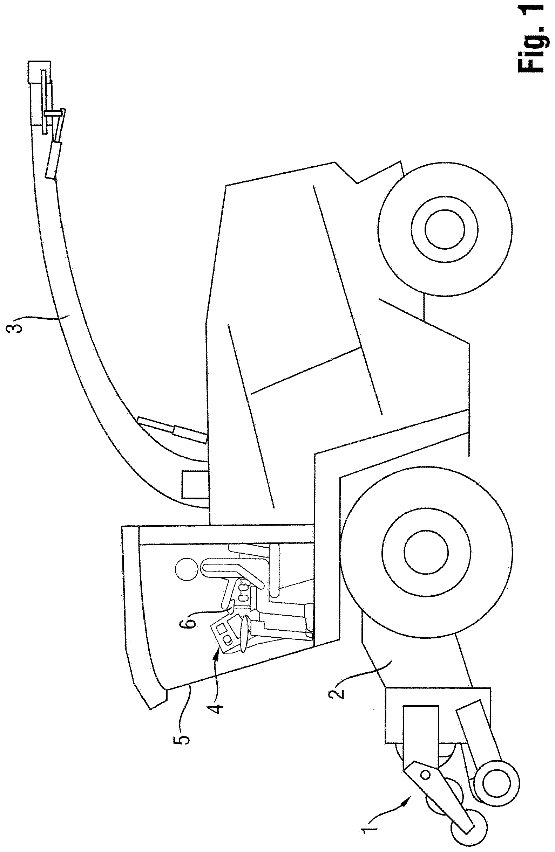

Der in Fig. 1 gezeigte Feldhäcksler ist dem Fachmann in seinen Grundzügen vertraut, so dass von einer Beschreibung seiner üblichen Baugruppen wie Erntevorsatz 1, Einzugsaggregat 2, Häckselwerk und Überladekrümmer 3 weitgehend abgesehen werden kann. Für das Verständnis der vorliegenden Erfindung wesentlich ist lediglich, dass der Erntevorsatz 1 abnehmbar ist, um ihn auf einem Anhänger auf öffentlicher Straße transportieren zu können, bzw. um unter verschiedenen Erntevorsätzen denjenigen auswählen und montieren zu können, der an das jeweils zu erntende Gut angepasst ist. Um den Erntevorsatz 1 z.B. von einem nicht dargestellten Transportwagen abzunehmen oder ihn nach Gebrauch wieder darauf abzusetzen, ist das Einzugsaggregat 2 mit Hilfe von Hydraulikzylindern höhenverstellbar, die von einem Dieselmotor des Feldhäckslers über eine Pumpe mit verstellbarem Durchsatz antreibbar sind.

Bedienelemente zum Steuern diverser Funktionen, insbesondere der Höhenverstellung des Einzugsaggregats 2, sind in einem Armaturenbrett 4 einer Fahrerkabine 5 und dort insbesondere an einem Multifunktionsgriff 6 angeordnet. Der Multifunktionsgriff 6 ist zum Steuern der Fortbewegung des Feldhäckslers in Bezug auf das Armaturenbrett 4 verstellbar. Er kann einen einzigen Verstell-Freiheitsgrad zum Steuern von Vorwärts- und Rückwärtsbewegung des Feldhäckslers aufweisen, z.B. in Form einer Kulissenführung von in US 6 715 269 B2 gezeigten Typ. Vorzugsweise jedoch hat der Multifunktionsgriff 6 zwei Verstell-Freiheitsgrade, einen in Fahrtrichtung zum Steuern von Vorwärts- und Rückwärtsbewegung und -fahrgeschwindigkeit und einen in Fahrzeugquerrichtung zum Steuern der Fahrtrichtung.

Natürlich ist der im Folgenden genauer beschriebene Multifunktionsgriff 6 nicht nur für einen Feldhäcksler sondern auch für beliebige andere landwirtschaftliche Fahrzeuge wie etwa einen Schlepper oder einen Mähdrescher brauchbar.

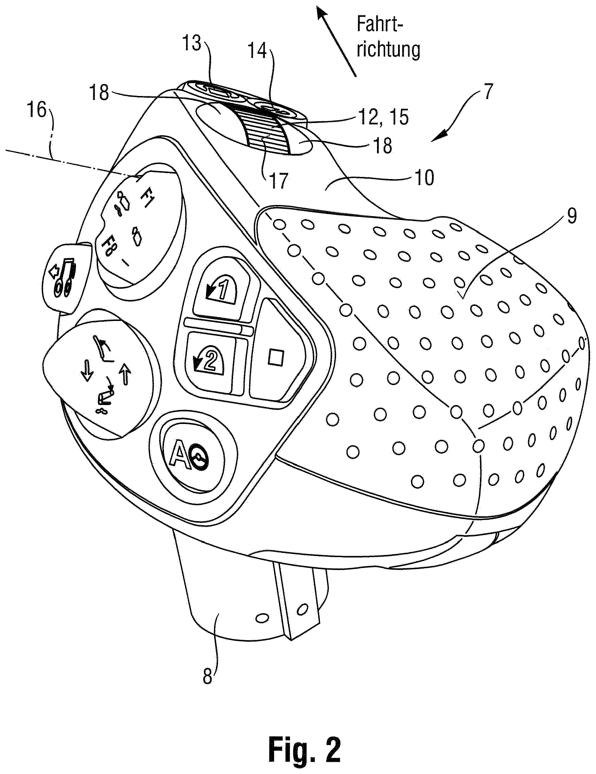

Fig. 2 zeigt eine perspektivische Ansicht des Kopfes des Multifunktionsgriffs, gesehen aus der Blickrichtung des Fahrers. An der Unterseite des Griffkopfs 7 ist ein hohler Stutzen 8 angeformt, der vorgesehen ist, um einen in Fig. 2 nicht gezeigten Schaft des Griffs aufzunehmen, der den Kopf 7 mit einem Gelenk im Armaturenbrett 4 verbindet. Der Griffkopf 7 ist unregelmäßig geformt, sodass einzelne Seiten nicht scharf gegeneinander abgegrenzt sind, sondern an mehr oder weniger stark abgerundeten Kanten kontinuierlich ineinander übergehen. Dennoch ist eine dem Stutzen 8 in etwa entgegengesetzte Oberseite als eine relativ schwach gekrümmte zusammenhängende Fläche identifizierbar, die in ihrem dem Fahrer zugewandten Bereich eine Auflagefläche 9 in dem Handteller eines Fahrers angepasster Form und Größe sowie in Fahrtrichtung angrenzend ein Bedienfeld 10 umfasst. Die Auflagefläche 9 ist in Fig. 2 erkennbar an auf ihr verteilten kleinen Vertiefungen.

Während die Auflagefläche 9 bemessen ist, um die Mittelhandknochen der zweiten bis fünften Finger auf ihrer gesamten Länge zu unterstützen, ist die Breite des Bedienfeldes 10 nur für Zeige- und Mittelfinger ausgelegt. So können die übrigen Finger an einer stark geneigten Flanke 11 an einer vom Fahrer abgewandten, in Fig. 2 nicht sichtbaren Seite des Griffkopfs 7 angreifen, und der Fahrer kann mit Hilfe dieser Finger den Griffkopf 7 zu sich hinziehen, auch wenn Zeige- und Mittelfinger auf dem Bedienfeld 10 im Wesentlichen ausgestreckt sind und keinen Zug ausüben können.

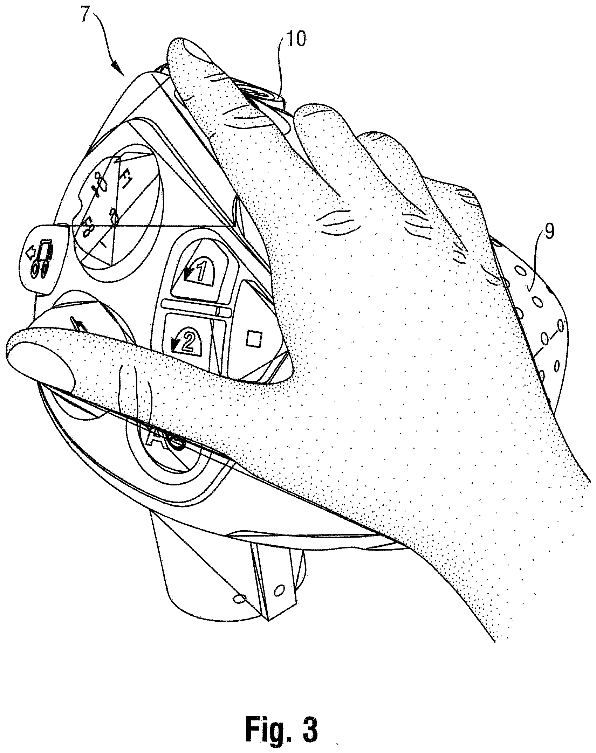

Gemäß dem Ausführungsbeispiel der Fig. 2 umfasst das Bedienfeld 10 drei Bedienelemente 12, 13, 14. Das Bedienelement 12 dient erfindungsgemäß zur Höhenverstellung des Einzugsaggregats 2 und des Erntevorsatzes 1, die Bedienelemente 13, 14 können anderen Funktionen des Erntevorsatzes 1 zugeordnet sein. Die zwei Bedienelemente, 13 und 14, sind am vorderen Ende des Bedienfeldes 10 so platziert, dass, wenn die Hand des Fahrers auf der Auflagefläche 9 wie in Fig. 3 gezeigt aufliegt und der Zeigefinger ausgestreckt ist, seine Spitze eines der beiden als Tasten ausgebildete Bedienelemente 13, 14 berühren und eindrücken kann. Das Bedienelement 12 liegt näher an der Auflagefläche 9, so dass der Benutzer, um es mit der Fingerspitze zu berühren und auszulenken, den Zeigefinger krümmen muss. Das Bedienelement 12 umfasst ein Rändelrad 15 von flach zylindrischer Gestalt, das um eine im Wesentlichen quer zur Fahrtrichtung des Feldhäckslers durch den Griffkopf 7 hindurch verlaufende Achse 16 drehbar ist. Das Rändelrad 15 ist zum größten Teil in dem Griffkopf 7 aufgenommen. Ein freiliegender Teil seiner Umfangsfläche 17 ist in Richtung der Achse 16 beiderseits durch gewölbte Gehäusesegmente 18 des Griffkopfs 7 verlängert, sodass die Gehäusesegmente 18 zusammen mit der freiliegenden Umfangsfläche 17 einen im Wesentlichen flach linsenförmigen Vorsprung auf dem Bedienfeld 10 bilden.

Fig. 4 zeigt das Rändelrad 15 in einer schematischen Seitenansicht in Richtung der Achse 16. Das Bedienfeld 10, in das das Rändelrad 15 eingelassen ist, steigt in Fahrtrichtung, nach links in Fig. 4, leicht an, sodass der Finger des Benutzers, um das Rändelrad 15 zu drehen, in Kontakt mit der freiliegenden Umfangsfläche 17 eine Bewegung in Richtung eines in Figur mit 19 bezeichneten Doppelpfeils vollführen muss. D.h. die Umfangsfläche 17 wird dort, wo die Fingerspitze des Fahrers sie berührt, im Wesentlichen in Fahrtrichtung und gleichzeitig leicht aufwärts oder entgegen der Fahrtrichtung und leicht abwärts ausgelenkt. Für den Fahrer ist es daher unmittelbar suggestiv, dass er mit einer Auslenkung in Fahrtrichtung eine Aufwärtsbewegung des Einzugsaggregats 2 und durch eine Bewegung entgegen der Fahrtrichtung eine Abwärtsbewegung auslöst.

Damit nicht bereits eine versehentliche Berührung der Umfangsfläche 17 zu einer Auslenkung und in der Folge zu einer Höhenverstellung des Einzugsaggregats 2 führen kann, ist das Rändelrad 15 in seiner Neutralstellung verrastet, hier z.B. mit Hilfe einer Blattfeder 20, deren Enden im Griffkopf 7 fixiert sind und die einen elastisch auslenkbaren Vorsprung 21 trägt, der in der Neutralstellung in eine Kerbe 22 des Rändelrads 15 eingreift.

Um die Stellung des Rändelrads 15 in ein zur Steuerung der Geschwindigkeit des Einzugsaggregats 2 nutzbares Signal umzuwandeln, kann z.B. ein Potentiometer an das Rändelrad 15 gekoppelt sein. Ein solches Potentiometer begrenzt im Allgemeinen durch seine Bauart die Drehbewegungsfreiheit des Rändelrads 15 auf ca. eine halbe Umdrehung. Mit ihm kann auf einfache Weise ein linearer Zusammenhang zwischen Auslenkung des Bedienelements 13 und der Verstellgeschwindigkeit des Einzugsaggregats 2 realisiert werden.

Denkbar ist auch die Verwendung eines digitalen Drehwinkelsensors, der eine Drehung des Rändelrads 15 in einen Impulszug mit zum zurückgelegten Drehwinkel proportionaler Anzahl von Impulsen umsetzt. Ein solcher Drehwinkelsensor ist besonders geeignet, um beliebige Zusammenhänge zwischen der Auslenkung α des Bedienelements 13 und der Verstellgeschwindigkeit v des Einzugsaggregats zu realisieren, etwa den in Fig. 5 als durchgezogene Kurve gezeigten, bei dem kleine Auslenkungen um die Neutralstellung 0 zu keiner Bewegung führen und erst Auslenkungen, die eine Schwelle +ε oder -ε überschreiten, zu einer linear mit der Auslenkung α zunehmenden Verstellgeschwindigkeit v führen.

Alternativ kann auch eine schneller als linear mit der Auslenkung zunehmende Verstellgeschwindigkeit implementiert werden. So kann einerseits eine niedrige Verstellgeschwindigkeit genau geregelt und andererseits eine schnelle Verstellung bei mäßiger Auslenkung erreicht werden.

Ein solcher digitaler Drehwinkelsensor schränkt nicht notwendigerweise die Drehbewegungsfreiheit des Rändelrades 15 ein, so dass im Prinzip die Möglichkeit besteht, das Rändelrad 15 beliebig weit, sogar um mehr als eine Umdrehung, gegen die Neutralstellung zu verdrehen. Um sicherzustellen, dass der Fahrer die Neutralstellung jederzeit schnell wieder einstellen kann, ist es daher zweckmäßig, die Drehbewegungsfreiheit des Rändelrades 15 zu beschränken. Hierzu kann beispielsweise, wie in Fig. 6 gezeigt, ein Vorsprung 23 des Rändelrades 15 dienen, der sich in der Neutralstellung mittig in dem von dem Rändelrad 15 ausgefüllten Fenster 24 des Bedienfeldes 10 befindet und von dort in Fahrtrichtung oder entgegen der Fahrtrichtung ausgelenkt werden kann, bis er gegen einen vorderen oder hinteren Rand 25 des Fensters 24 anstößt. Solange die Spitze des Fingers des Benutzers den Vorsprung 23 berührt, kann er Stärke und Richtung der Auslenkung einschätzen, ohne auf das Bedienfeld 10 schauen zu müssen, und weiß daher jederzeit, wie er das Bedienelement 15 bewegen muss, um das Einzugsaggregat 2 anzuhalten. Bei dieser Ausgestaltung muss das Rändelrad 15 nicht kreisrund sein, es genügt ein Kreissektor, dessen Umfangsfläche lang genug ist, um in jeder erreichbaren Stellung das Fenster 24 auszufüllen.

Um im Notfall das Antriebsaggregat schnell stoppen zu können, kann dem Rändelrad 15, wie ebenfalls in Fig. 6 gezeigt, eine Rückstellfeder zugeordnet sein, hier in Form einer Haarnadelfeder 26, deren zwei Schenkel an ihren miteinander verbunden Enden im Kopf 7 fixiert sind und deren freie Enden beiderseits eines von dem Rändelrad 15 exzentrisch abstehenden Zapfens 27 anliegen. Durch jede Auslenkung des Rändelrads 15 aus der Neutralstellung wird ein Schenkel der Haarnadelfeder 26 ausgelenkt, sodass, wenn der Benutzer das Rändelrad 15 loslässt, dieses sofort in die Neutralstellung zurückgedrängt wird und die Bewegung des Einzugsaggregats zum Stillstand kommt.

Fig. 7 zeigt eine zu Fig. 2 analoge perspektivische Ansicht eines Griffkopfs gemäß einer zweiten Ausgestaltung der Erfindung. Hier ist das wiederum als Rändelrad 15 ausgebildete Bedienelement 12 an einem eine seitliche Flanke des Griffkopfs 7 ausfüllenden Bedienfeld 28 angeordnet und mit dem Daumen bedienbar. Entsprechend der Bewegungsfähigkeit des Daumens ist das Rändelrad 15 hier um eine Achse 16 drehbar, die sich im Wesentlichen parallel zu dem auf dem Bedienfeld 10 ruhenden Zeigefinger bzw. in etwa in Fahrtrichtung des Feldhäckslers erstreckt. Die freiliegende Umfangsfläche 17 des Rändelrades ist somit auf und ab bewegbar, und die Tatsache, dass ein Aufwärtsauslenkung der Umfangsfläche 17 einer Aufwärtsbewegung des Einzugsaggregats 2 bzw. eine Abwärtsauslenkung der Umfangsfläche 17 eine Abwärtsbewegung des Einzugsaggregats 2 auslöst, kommt der Intuition des Fahrers entgegen.

### Bezugszeichen

- 1: Erntevorsatz
- 2: Einzugsaggregat
- 3: Überladekrümmer
- 4: Armaturenbrett
- 5: Fahrerkabine
- 6: Multifunktionsgriff
- 7: Griffknopf
- 8: Stutzen
- 9: Auflagefläche
- 10: Bedienfeld
- 11: Flanke
- 12: Bedienelement
- 13: Bedienelement
- 14: Bedienelement
- 15: Rändelrad
- 16: Achse
- 17: Umfangsfläche
- 18: Gehäusesegment
- 19: Doppelpfeil
- 20: Blattfeder
- 21: Vorsprung
- 22: Kerbe
- 23: Vorsprung
- 24: Fenster
- 25: Rand
- 26: Haarnadelfeder
- 27: Zapfen

## Patentansprüche

1. Landwirtschaftliches Arbeitsfahrzeug mit einem Arbeitswerkzeug (1), einem Antriebsaggregat zum Heben und Senken des Arbeitswerkzeugs (1), einem Multifunktionsgriff (6) an dem ein Bedienelement (12) angeordnet ist das zum Steuern des Antriebsaggregats aus einer Neutralstellung (0) in unterschiedliche Richtungen auslenkbar ist, wobei die Geschwindigkeit (v), mit der das Antriebsaggregat das Arbeitswerkzeug (1) bewegt, eine kontinuierliche Funktion der Auslenkung (∝) des Bedienelements (12) ist **dadurch gekennzeichnet, dass** das an einem Multifunktionsgriff (6) angeordnete Bedienelement (12) ein Rändelrad (15) von flach zylindrischer Gestalt umfasst, das um eine im Wesentlichen quer zur Fahrtrichtung des Arbeitsfahrzeuges durch einen Griffkopf (7) hindurch verlaufende Achse (16) drehbar ist, wobei ein freiliegender Teil seiner Umfangsfläche (17) in Richtung der Achse (16) beiderseits durch gewölbte Gehäusesegmente (18) des Griffkopfs (7) verlängert ist, sodass die Gehäusesegmente (18) zusammen mit der freiliegenden Umfangsfläche (17) einen im Wesentlichen flach linsenförmigen Vorsprung auf einem Bedienfeld (10) des Multifunktionsgriffes (6) bilden.

2. Landwirtschaftliches Arbeitsfahrzeug nach Anspruch 1, **dadurch gekennzeichnet, dass** das Arbeitswerkzeug (1) durch Auslenken einer freiliegenden Oberfläche (17) des Bedienelements (12) nach oben und/oder in Fahrtrichtung anhebbar und durch Auslenken der Oberfläche (17) entgegen der Fahrtrichtung und/oder nach unten absenkbar ist.

3. Landwirtschaftliches Arbeitsfahrzeug nach einem der Ansprüche 1 oder 2, **dadurch gekennzeichnet, dass** der Multifunktionsgriff (6) eine Auflagefläche (9) aufweist, die orientiert ist, um wenigstens einen Teil des Handtellers einer in einer Betriebshaltung aufliegenden Hand eines Benutzers zu unterstützen, und dass das Bedienelement (12) für einen Finger der in der Betriebshaltung aufliegenden Hand erreichbar ist.

4. Landwirtschaftliches Arbeitsfahrzeug nach einem der Ansprüche 1 bis 3, **dadurch gekennzeichnet, dass** eine Oberfläche (18) des Multifunktionsgriffs (6) quer zur Auslenkrichtung bündig an eine freiliegende Oberfläche (17) des Bedienelements (12) anschließt.

5. Landwirtschaftliches Arbeitsfahrzeug nach einem der vorhergehenden Ansprüche, **dadurch gekennzeichnet, dass** das Bedienelement in der Neutralstellung durch ein Rastmittel (20, 21, 22) fixiert ist.

6. Landwirtschaftliches Arbeitsfahrzeug nach einem der vorhergehenden Ansprüche, **dadurch gekennzeichnet, dass** ein Intervall (-ε, +ε), in dem die Geschwindigkeit des Arbeitswerkzeugs (1) Null ist, sich beiderseits der Neutralstellung (0) erstreckt.

7. Landwirtschaftliches Arbeitsfahrzeug nach einem der vorhergehenden Ansprüche, **dadurch gekennzeichnet, dass** zur Umwandlung der Stellung des Rändelrads (15) in ein zur Steuerung der Geschwindigkeit des Einzugsaggregats (2) nutzbares Signal ein Potentiometer an das Rändelrad (15) gekoppelt ist.

8. Landwirtschaftliches Arbeitsfahrzeug nach einem der vorhergehenden Ansprüche, **dadurch gekennzeichnet, dass** ein digitaler Drehwinkelsensor vorgesehen ist, der eine Drehung des Rändelrads (15) in einen Impulszug mit zum zurückgelegten Drehwinkel proportionaler Anzahl von Impulsen umsetzt.

9. Landwirtschaftliches Arbeitsfahrzeug nach einem der vorhergehenden Ansprüche, **dadurch gekennzeichnet, dass** es ein Mähdrescher oder ein Feldhäcksler ist.

## Claims

1. An agricultural working vehicle comprising a working tool (1), a drive assembly for raising and lowering the working tool (1), a multi-function handle (6) on which is arranged an operating element (12) which can be deflected from a neutral position (10) in different directions for controlling the drive assembly, wherein the speed (v) at which the drive assembly moves the working tool (1) is a continuous function of the deflection (α) of the operating element (12),
**characterised in that** the operating element (12) arranged on a multi-function handle (6) includes a knurled wheel (15) of flat cylindrical configuration, which is rotatable about an axis (16) extending substantially transversely relative to the direction of travel of the working vehicle through a handle head (7), wherein an exposed portion of its peripheral surface (17) is prolonged in the direction of the axis (16) at both sides by curved housing segments (18) of the handle head (7) so that the housing segments (18) together with the exposed peripheral surface (17) form a substantially flat lens-shaped projection on an operating panel (10) of the multi-function handle (6).

2. An agricultural working vehicle according to claim 1 **characterised in that** the working tool (1) can be raised by deflection of an exposed surface (17) of the operating element (12) upwardly and/or in the direction of travel and can be lowered by deflection of the surface (17) in opposite relationship to the direction of travel and/or downwardly.

3. An agricultural working vehicle according to one of claims 1 and 2 **characterised in that** the multi-function handle (6) has a support surface (9) which is oriented to support at least a part of the palm of the hand of a user resting thereon in an operating position and that the operating element (12) can be reached by a finger of the hand resting in the operating position.

4. An agricultural working vehicle according to one of claims 1 to 3 **characterised in that** a surface (18) of the multi-function handle (6) adjoins transversely relative to the deflection direction in flush relationship an exposed surface (17) of the operating element (12).

5. An agricultural working vehicle according to one of the preceding claims **characterised in that** the operating element is fixed in the neutral position by a latching means (20, 21, 22).

6. An agricultural working vehicle according to one of the preceding claims **characterised in that** an interval (-ε, +ε) in which the speed of the working vehicle (1) is zero extends on both sides of the neutral position (O).

7. An agricultural working vehicle according to one of the preceding claims **characterised in that** a potentiometer is coupled to the knurled wheel (15) to convert the position of the knurled wheel (15) into a signal which can be used to control the speed of the intake assembly (2).

8. An agricultural working vehicle according to one of the preceding claims **characterised in that** there is provided a digital rotary angle sensor which converts a rotation of the knurled wheel (15) into a pulse train with a number of pulses that is proportional to the rotary angle covered.

9. An agricultural working vehicle according to one of the preceding claims **characterised in that** it is a combine harvester or a forage harvester.

## Revendications

1. Véhicule de travail agricole comprenant un outil de travail (1), un organe d'entraînement pour lever et abaisser l'outil de travail (1), une poignée multifonction (6) sur laquelle est disposé un élément de manoeuvre (12) qui, pour commander l'organe d'entraînement, est déplaçable dans des directions diverses à partir d'une position neutre (0), la vitesse (v) à laquelle l'organe d'entraînement déplace l'outil de travail (1) étant une fonction continue de la déviation (α) de l'élément de manoeuvre (12), **caractérisé en ce que** l'élément de manoeuvre (12) disposé sur une poignée multifonction (6) comprend une mollette (15) de forme cylindrique plate qui peut tourner autour d'un axe (16) traversant une tête de poignée (7) sensiblement transversalement au sens de la marche, une partie apparente de sa surface périphérique (17) étant prolongée des deux côtés, dans la direction de l'axe (16), par des segments de boîtier bombés (18) de la tête de préhension (7), de sorte que les segments de boîtier (18) forment, conjointement avec la surface périphérique apparente (17), une saillie en forme de lentille sensiblement plate sur une aire de manoeuvre (10) de la poignée multifonction (6).

2. Véhicule de travail agricole selon la revendication 1, **caractérisé en ce que** l'outil de travail (1) peut être levé en déplaçant une surface apparente (17) de l'élément de manoeuvre (12) vers le haut et/ou dans le sens de la marche et peut être abaissé en déplaçant la surface (17) à l'opposé du sens de la marche et/ou vers le bas.

3. Véhicule de travail agricole selon une des revendications 1 ou 2, **caractérisé en ce que** la poignée multifonction (6) comporte une surface d'appui (9) qui est orientée pour soutenir au moins une partie de la paume d'une main de l'utilisateur placée en position de travail, et **en ce que** l'élément de manoeuvre (12) peut être atteint par un doigt de la main placée en position de travail.

4. Véhicule de travail agricole selon une des revendications 1 à 3, **caractérisé en ce qu'**une surface (18) de la poignée multifonction (6) se raccorde de manière jointive, transversalement à la direction de déplacement, à une surface apparente (17) de l'élément de manoeuvre (12).

5. Véhicule de travail agricole selon une des revendications précédentes, **caractérisé en ce que** l'élément de manoeuvre est bloqué dans la position neutre par l'intermédiaire d'un moyen de crantage (20, 21, 22).

6. Véhicule de travail agricole selon une des revendications précédentes, **caractérisé en ce qu'**un intervalle (-ε, +ε), dans lequel la vitesse de l'outil de travail (1) est nulle, s'étend de part et d'autre de la position neutre (0).

7. Véhicule de travail agricole selon une des revendications précédentes, **caractérisé en ce que**, pour convertir la position de la mollette (15) en un signal utilisable pour commander la vitesse de l'organe d'alimentation (2), un potentiomètre est couplé à la mollette (15).

8. Véhicule de travail agricole selon une des revendications précédentes, **caractérisé en ce qu'**il est prévu un capteur numérique d'angle de rotation qui convertit une rotation de la mollette (15) en un train d'impulsions comprenant un nombre d'impulsions proportionnel à l'angle de rotation parcouru.

9. Véhicule de travail agricole selon une des revendications précédentes, **caractérisé en ce qu'**il s'agit d'une moissonneuse-batteuse ou d'une ensileuse.
